# EUROPEAN PATENT APPLICATION

(11) **EP 3 220 309 A2**
(43) Date of publication of application: **20.09.2017**
(21) Application number: 17159821.2
(22) Date of filing: 08.03.2017
(51) Int. Cl.: G06K 7/10

(54) **TAG READING APPARATUS, COLLATION APPARATUS, TAG READING METHOD AND COMPUTER PROGRAM**

(30) Priority: 16.03.2016 JP 2016052736
(71) Applicant: Kabushiki Kaisha Toshiba, Minato-ku, Tokyo 105-8001 (JP)
(72) Inventor: Hirano, Tatsuma, Tokyo 105-8001 (JP); Sekiguchi, Takahiro, Tokyo 105-8001 (JP)
(74) Representative: Hoffmann Eitle

(57) **Abstract**

A tag reading apparatus as an aspect of the present invention is provided with a communicator and an instructor. The communicator is arranged for performing wireless communication with an RFID tag. The instructor is arranged for giving an instruction to stop wireless communication with the RFID tag to another tag reading apparatus based on a response result of the RFID tag to a response request to the RFID tag.

## Description

### FIELD

The present disclosure relates to a tag reading apparatus, a collation apparatus, a tag reading method and a computer program.

### BACKGROUND

In RFID (radio frequency identifier) systems in which a reader reads data written in a tag through wireless communication or the like, when the tag receives a query associated with data read from the reader, the tag transmits the data to the reader. However, the tag cannot simultaneously perform wireless communication with a plurality of readers. When the tag receives queries from the plurality of readers, the tag transmits the data only to a reader which is a sender of the first received query. Therefore, when there are a plurality of readers, if the respective readers do not operate in coordination, the tag cannot allow an intended reader to read the data.

### SUMMARY

According to the aspects of the present invention there is provided tag reading apparatus which operates in coordination to allow a plurality of tag reading apparatuses to read data from a single RFID tag.

The apparatus according to the present invention are described in the claims.

### BRIEF DESCRIPTION OF THE DRAWINGS

FIG. 1 is a block diagram illustrating an example of a schematic configuration of a tag reading system according to a first arrangement;
FIG. 2 is a message sequence chart according to the first arrangement;
FIG. 3 is a message sequence chart according to a second arrangement;
FIG. 4 is a message sequence chart according to a third arrangement;
FIG. 5 is a block diagram illustrating an example of a schematic configuration of a tag reading system according to a fourth arrangement;
FIG. 6 is a flowchart of schematic processing according to the fourth arrangement; and
FIG. 7 is a block diagram illustrating an example of hardware configuration that implements a wireless communication apparatus according to an arrangement of the present invention.

### DETAILED DESCRIPTION

A tag reading apparatus as an aspect of the present invention is provided with a communicator and an instructor. The communicator is arranged for performing wireless communication with an RFID tag. The instructor is arranged for giving an instruction to stop wireless communication with the RFID tag to another tag reading apparatus based on a response result of the RFID tag to a response request to the RFID tag.

Below, a description is given of arrangements of the present invention with reference to the drawings. The present invention is not limited to the arrangements.

### (First Arrangement)

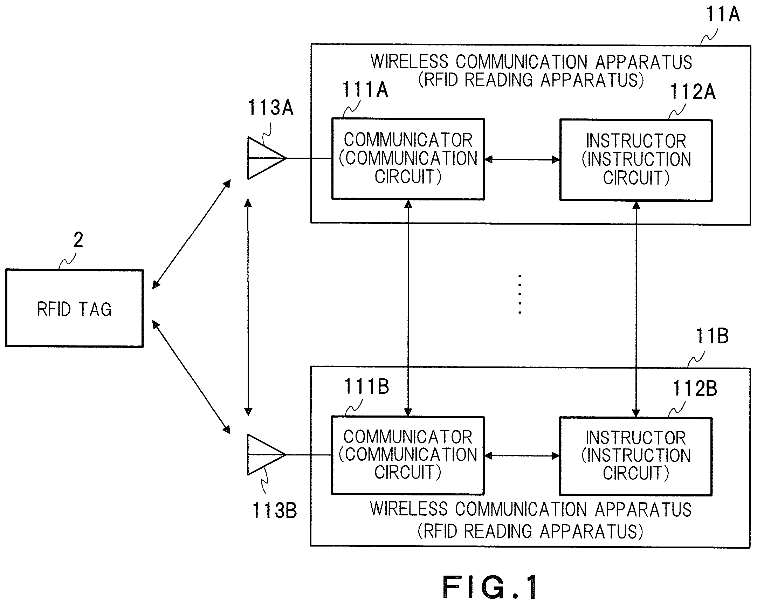

FIG. 1 is a block diagram illustrating an example of a schematic configuration of an RFID system (tag reading system) according to a first arrangement. The tag reading system according to the present arrangement is constructed of a plurality of wireless communication apparatuses 11 which are RFID readers (tag reading apparatus) and one RFID tag 2. Note that the respective wireless communication apparatuses 11 are distinguished from each other by a letter as a subscript.

The following description will be given assuming that the tag reading system is provided with two wireless communication apparatuses of a wireless communication apparatus 11A and a wireless communication apparatus 11B, but another wireless communication apparatus 11 may also exist. Even when the other wireless communication apparatus 11 exists, processing on the other wireless communication apparatus 11 and the RFID tag 2 is the same.

The wireless communication apparatus 11 is provided with a communicator (communication circuit) 111, an instructor (instruction circuit) 112 and an antenna device 113.

Each wireless communication apparatus 11 acquires desired data from the RFID tag 2 through wireless communication to read the data. It is assumed that Each wireless communication apparatus 11 periodically searches the RFID tag 2 and that the wireless communication apparatus 11 can thereby perform wireless communication with the RFID tag 2.

Each wireless communication apparatus 11 recognizes other wireless communication apparatuses 11 and cooperates with each other. This "cooperation" means that the wireless communication apparatuses 11 can give/receive instructions associated with execution of wireless communication with the RFID tag 2. The cooperation may be done through wireless or wired communication or by an electric signal of a circuit or the like. Furthermore, the cooperation may also be done via a relay apparatus (not shown) or data sink or the like.

The RFID tag 2 transmits data recorded in the RFID tag 2 to the wireless communication apparatus 11. The present arrangement assumes that ID information which is information to identify the RFID tag 2 is transmitted as the desired data. The data recorded in the RFID tag 2 is not particularly limited and recorded in the RFID tag 2 in advance. Furthermore, data necessary to perform wireless communication with each wireless communication apparatus 11 is also recorded in the RFID tag 2. Examples of such data may include a random sequence (RN: random number) to perform encryption or decoding of data.

Hereinafter, an internal configuration of the wireless communication apparatus 11 will be described.

Upon receiving an instruction from the instructor 112, the communicator 111 outputs a radio wave to perform wireless communication with the RFID tag 2 via the antenna device 113. Information necessary for wireless communication is stored in advance.

Upon receiving an instruction from the instructor 112, the communicator 111 may communicate with each wireless communication apparatus 11. Communication with each wireless communication apparatus 11 may be performed wirelessly or by wire.

The instructor 112 executes an instruction necessary to perform communication with the RFID tag 2 or each wireless communication apparatus 11. Examples of such an instruction include an instruction to transmit a query to the RFID tag 2, an instruction to transmit ACK (acknowledgement) to start reading data to the RFID tag 2, an instruction to transmit NACK (negative acknowledgement) for resetting a communication state of the RFID tag 2 to the RFID tag 2, and an instruction to transmit a signal for temporarily stopping or resuming communication with the RFID tag 2 to each wireless communication apparatus 11.

"Resetting the communication state of the RFID tag 2" refers to setting a state (initial state) in which the RFID tag 2 is ready to receive a query from the wireless communication apparatus 11. Note that, after receiving the query from the wireless communication apparatus 11, the RFID tag 2 will no longer receive any query from the other wireless communication apparatuses 11. Since these operations of the RFID tag 2 are defined in EPC Global Class 1 Generation 2, which is a standard of RFID, an existing RFID tag 2 can be used.

It is assumed here that the instructor 112 inputs/outputs an electric signal or the like and transmits an instruction to each wireless communication apparatus 11, but it is also possible to transmit an instruction to each wireless communication apparatus 11 via the communicator 111 through wired or wireless communication. Furthermore, an input/output device (input/output circuit) that inputs/outputs an electric signal or the like may also be provided in addition to the instructor.

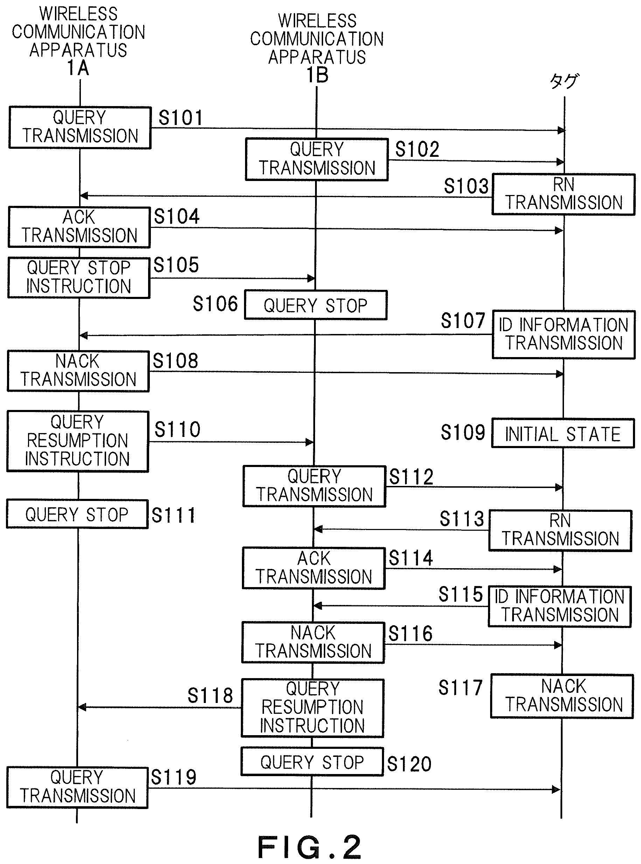

Next, a series of operations carried out in the tag reading system according to the first arrangement will be described. FIG. 2 is a message sequence chart according to the first arrangement. Here, description will be given assuming that each wireless communication apparatus 11 and the RFID tag 2 conform to the EPC Global Class 1 Generation 2 standard, but they need not be based on the standard if they can perform the operation shown in FIG. 2.

Note that the RFID tag 2 is assumed to be in an initial state at the start of the message sequence chart.

The wireless communication apparatus 11A transmits a query to search the RFID tag 2 in the periphery (S101). On the other hand, the wireless communication apparatus 11B also transmits a query (S102). Here, description will be given assuming that the wireless communication apparatus 11A transmits a query before the wireless communication apparatus 11B does and that the query from the wireless communication apparatus 11A arrives at the RFID tag 2 before the query from the wireless communication apparatus 11B.

Note that query transmission may be performed at random timing or transmission timing may be defined in advance. The wireless communication apparatus 11A may cooperate with the wireless communication apparatus 11B to determine the timing. Note that when the query from the wireless communication apparatus 11B arrives at the RFID tag 2 before the query from the wireless communication apparatus 11A, processing on the wireless communication apparatus 11A and processing on the wireless communication apparatus 11B are switched round in the subsequent sequence.

The RFID tag 2 that receives the query transmitted by the wireless communication apparatus 11A transmits a random sequence to the wireless communication apparatus 11A based on the RFID standard (S103). Next, the wireless communication apparatus 11A that receives the random sequence from the RFID tag 2 recognizes that a read process of the RFID tag 2 has started, transmits ACK to the RFID tag 2 to inform that the random sequence has been correctly received (S104).

The wireless communication apparatus 11A instructs the wireless communication apparatus 11B to stop transmission of the query (S105). The wireless communication apparatus 11B instructed by the wireless communication apparatus 11A to stop transmission of the query stops transmission of a query (S106).

Next, the RFID tag 2 that receives ACK from the wireless communication apparatus 11 transmits ID information to the wireless communication apparatus 11A (S107). Thereby, The wireless communication apparatus 11A can read the desired data. The wireless communication apparatus 11A that receives the ID information transmits NACK to the RFID tag 2 to return the state of the RFID tag 2 to an initial state (S108). The RFID tag 2 that receives NACK returns to the initial state and enters a state ready to respond to a case where the RFID tag 2 receives a query again (S109).

The wireless communication apparatus 11A instructs the wireless communication apparatus 11B to resume transmission of a query (S110). Having been instructed by the wireless communication apparatus 11A to resume transmission of a query, the wireless communication apparatus 11B resumes the transmission of a query (S112).

The wireless communication apparatus 11A that has transmitted NACK stops the transmission of the query and enters a standby state (S111).

When the RFID tag 2 that has already received NACK and returned to the initial state receives a query from the wireless communication apparatus 11B that has resumed transmission of the query, RFID tag 2 transmits a random sequence to the wireless communication apparatus 11B (S113). The wireless communication apparatus 11B that receives the random sequence recognizes that a read process of the RFID tag 2 has started and transmits ACK indicating that the random sequence has been correctly received to the RFID tag 2 (S114). The RFID tag 2 that receives ACK from the wireless communication apparatus 11B transmits ID information to the wireless communication apparatus 11B (S115). The wireless communication apparatus 11B that receives the ID information of the RFID tag 2 transmits NACK to return the state of the RFID tag 2 to an initial state (S116). The RFID tag 2 that receives NACK returns to the initial state and enters a state ready to respond to a case where the RFID tag 2 receives a query again (S117).

The wireless communication apparatus 11B instructs the wireless communication apparatus 11A to resume transmission of a query (S118). Having been instructed by the wireless communication apparatus 11B to resume transmission of a query, the wireless communication apparatus 11A then resumes transmission of a query (S119).

The wireless communication apparatus 11B that has transmitted NACK enters a standby state without transmitting a query (S120). Communication is carried out between the wireless communication apparatus 11A and the RFID tag 2 in this way, and the wireless communication apparatus 11A and the wireless communication apparatus 11B can alternately read data from the RFID tag 2.

Note that the present message sequence chart is an example and the message sequence chart is not limited to this. For example, although the wireless communication apparatus 11A gives a query stop notice (S105) after transmitting ACK (S104), the order of processes (S104 and S105) may be reversed. For example, when the period for which the wireless communication apparatus 11 transmits a query is short, a query stop notice may be transmitted before transmitting ACK so as to avoid interference of radio waves. The same applies to message sequence charts of other arrangements.

In FIG. 2, it is assumed that the wireless communication apparatus 11 carries out communication with the tag a plurality of times for the sake of consistency or the like of acquired data, whereas in a case where data needs to be acquired from the tag only one time, the wireless communication apparatus 11 may need not transmit a query to the tag again.

As described above, according to the present arrangement, the wireless communication apparatus 11 that receives a response from the RFID tag 2 instructs each wireless communication apparatus 11 to stop transmission of a query, instructs, after the communication with the RFID tag 2 is completed, to resume the transmission of a query and the wireless communication apparatus 11 itself stops the transmission of a query. It is thereby possible to avoid a situation in which the RFID tag 2 returns no response. It is further possible to avoid interference of radio waves by a plurality of wireless communication apparatuses. Therefore, an intended RFID reader can read data of the RFID tag 2.

### (Second Arrangement)

A second arrangement has the same configuration as that of the arrangement described so far, but is different in some instructions executed by the instructor 112.

The instructor 112 of the present arrangement does not execute an instruction to transmit NACK to the RFID tag 2 after reading of ID information is completed. Instead, the instructor 112 gives an instruction to wait for a predetermined period of time after reading of the ID information is completed. Note that the term "standby" means not performing communication with the RFID tag 2, and any operation other than communication can be performed on the RFID tag 2. That is, a situation is created for a predetermined period of time in which the tag does not perform wireless communication with any of the wireless communication apparatuses 11.

When no wireless communication is carried out for a predetermined period of time, the tag returns to an initial state. Therefore, this is consequently similar to a situation when NACK is received. Since the period and operation of returning to the initial state are defined in the RFID standard, the existing RFID tag 2 can also be used in the present arrangement. Note that the predetermined standby period may be required to be equal to or longer than the period for the RFID tag 2 to return to the initial state.

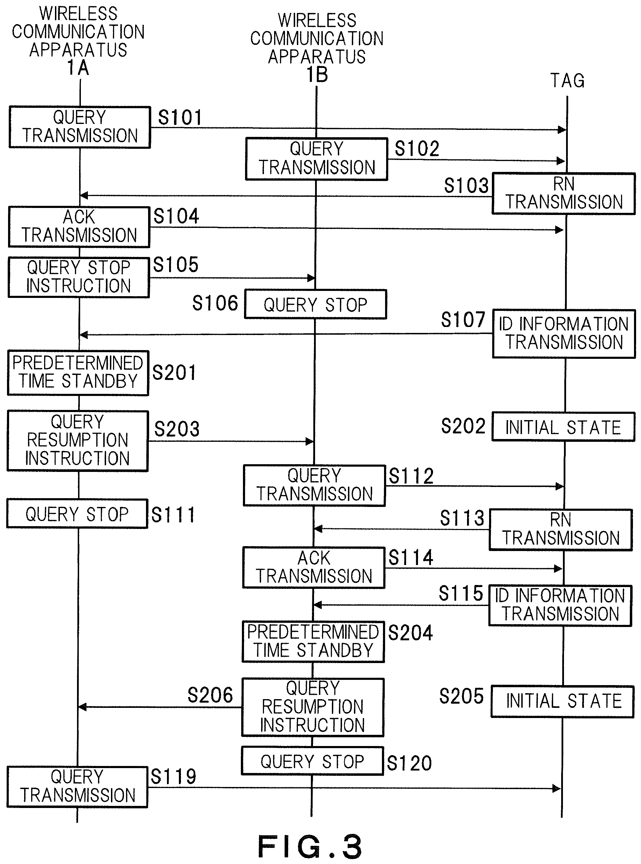

Next, operations of each wireless communication apparatus 11 and the RFID tag 2 according to the second arrangement will be described. FIG. 3 is a message sequence chart according to the second arrangement.

S101 to S107 are similar to those of the first arrangement. The wireless communication apparatus 11 that has received ID information remains in a standby state for a predetermined period of time in order to return the state of the RFID tag 2 to an initial state (S201). After the predetermined period of time passes, the RFID tag 2 is brought into an initial state since the period during which no data is received exceeds the period for returning to the initial state, and enters a state ready to respond to a case where the RFID tag 2 receives a query again (S202).

After the predetermined period of time passes, the wireless communication apparatus 11A instructs the wireless communication apparatus 11B to resume transmission of a query (S203). After being instructed to resume the transmission of a query, the wireless communication apparatus 11B carries out processes from S112 to S115 as in the case of the first arrangement.

The wireless communication apparatus 11B that receives ID information remains in a standby state for a predetermined period of time to return the state of the RFID tag 2 to an initial state (S204). After the predetermined period of time passes, the RFID tag 2 returns to the initial state, and enters a state ready to respond to a case where the RFID tag 2 receives a query again (S205). Note that the standby time period of the wireless communication apparatus 11A may be different from that of the wireless communication apparatus 11B.

After a predetermined period of time passes, the wireless communication apparatus 11B instructs the wireless communication apparatus 11A to resume transmission of a query (S206). The subsequent processes are similar to those of the first arrangement. In this way, the wireless communication apparatus 11A and the wireless communication apparatus 11B can alternately read data from the RFID tag 2.

There can be a case in the first arrangement where the RFID tag 2 may not be able to receive transmitted NACK, and therefore the wireless communication apparatus 11B may possibly transmit a query despite the possibility that RFID tag 2 may not have returned to the initial state. On the other hand, in the present arrangement, a query is transmitted after the tag is surely set in the initial state, and it is thereby possible to improve the certainty.

As described above, according to the second arrangement, not only an intended reader can read data of the RFID tag 2 but also the RFID tag 2 is surely returned to the initial state and a query of the next wireless communication apparatus 11 that performs communication is then transmitted, and it is thereby possible to reduce the possibility that communication with the RFID tag 2 will fail.

### (Third Arrangement)

A third arrangement has the same configuration as those of the arrangements described so far, but is only different in the number of times data is read during single communication in each wireless communication apparatus 11. In the foregoing arrangements, when each wireless communication apparatus 11 reads data of the RFID tag 2 one time, each wireless communication apparatus 11 hands over an opportunity of communication with the RFID tag 2 to the wireless communication apparatus 11. In contrast, in the third arrangement, each wireless communication apparatus 11 consecutively reads data until a predetermined count is reached.

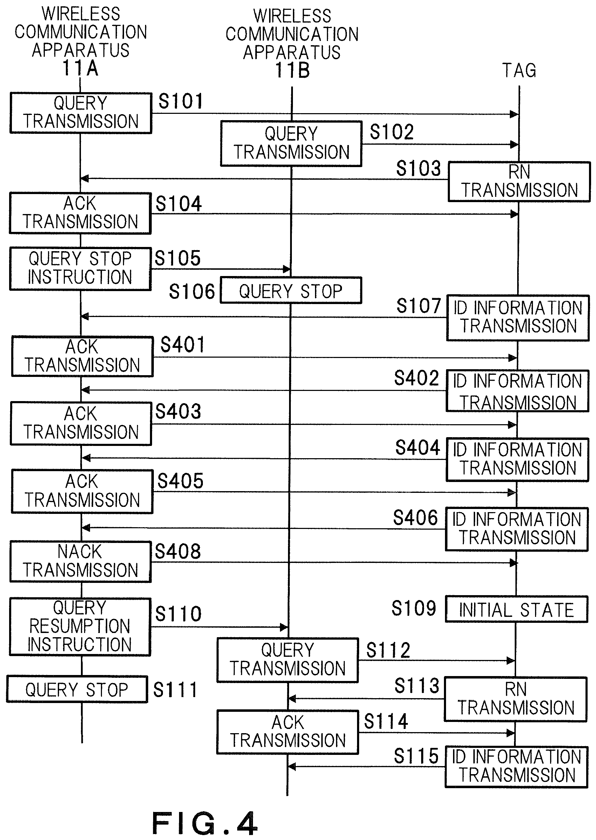

FIG. 4 is a message sequence chart according to the third arrangement. In an example in FIG. 4, the number of times (predetermined count) the wireless communication apparatus 11 reads data of the RFID tag 2 is assumed to be four. Note that the number of times data is read may be identical or different among the respective wireless communication apparatuses 11.

S101 to S107 are similar to those in the first arrangement. The wireless communication apparatus 11A that receives ID information increments the number of times ID information is received (the received number), and since the received number is not equal to or greater than the predetermined number of times, the wireless communication apparatus 11A transmits ACK (S401). The RFID tag 2 that receives ACK transmits ID information to the wireless communication apparatus 11A again (S402). The wireless communication apparatus 11A that receives ID information again increments the received number, and since the received number is not equal to or greater than the predetermined number of times, the wireless communication apparatus 11A transmits ACK again (S403). Thus, transmission of ACK and transmission of ID information are repeated (S403 to S406).

The wireless communication apparatus 11A whose number of times ID information is received reaches the predetermined number of times transmits NACK to the RFID tag 2 to return the state of the RFID tag 2 to an initial state (S408).

After transmitting NACK, the processes in S109 to S115 are carried out and the wireless communication apparatus 11B acquires ID information from the RFID tag 2 as in the case of the first arrangement.

Although skipped in FIG. 4, regarding the processing of the wireless communication apparatus 11B that receives ID information, transmission of ACK and transmission of ID information are repeated until the received number reaches the predetermined number of times as in the case of the wireless communication apparatus 11. After the received number reaches the predetermined number of times, the data reading by the wireless communication apparatus 11 and the RFID tag 2 may or may not be resumed again as in the case of the first arrangement.

According to the first arrangement, query transmission and RN transmission are performed every time each wireless communication apparatus 11 reads data. That is, when data is read a predetermined number of times, query transmission and RN transmission are respectively performed a predetermined number of times. In contrast, in the present arrangement, since data is consecutively read, even when data is read a predetermined number of times, query transmission and RN transmission need only to be each performed one time.

As described above, according to the third arrangement, it is possible to consecutively specify the number of times the wireless communication apparatus 11 reads data and reduce the amount of communication and the amount of processing between the wireless communication apparatus 11 and the RFID tag 2.

### (Fourth Arrangement)

In the arrangements described so far, the wireless communication apparatus 11 performs all the processes up to acquisition of desired data from the RFID tag 2, but in a fourth arrangement, each wireless communication apparatus 11 collates desired data acquired, and can thereby improve the accuracy of the desired data.

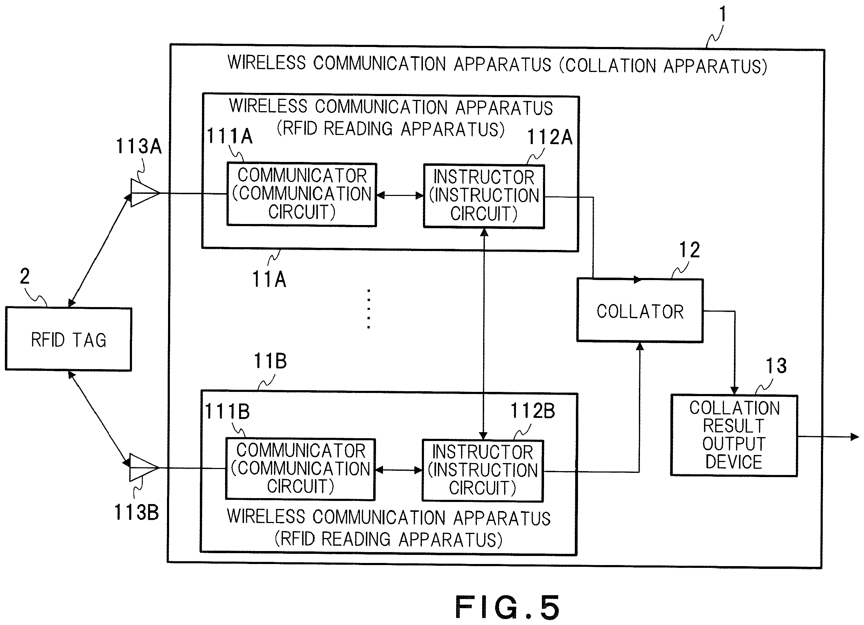

FIG. 5 is a block diagram illustrating an example of a schematic configuration of a tag reading system according to the fourth arrangement. The tag reading system according to the present arrangement is constructed of a collation apparatus 1 and the RFID tag 2.

The collation apparatus 1 is provided with a wireless communication apparatus 11A, a wireless communication apparatus 11B, a collator 12 and a collation result output device 13. Note that three or more wireless communication apparatuses 11 may also be provided.

The wireless communication apparatus 11A and the wireless communication apparatus 11B have the same configurations as those in the arrangements described so far, but are only different in that desired data such as ID information acquired from the RFID tag 2 is transmitted to the collator 12. Note that, instead of the configuration in which the instructor transmits data to the collator 12, a configuration may be adopted which includes an input/output device (input/output circuit) (not shown) arranged for input/output an electric signal or the like.

Although the configuration is adopted here in which the collation apparatus 1 is internally provided with each wireless communication apparatus 11, each wireless communication apparatus 11 may be an external apparatus of the collation apparatus 1. Furthermore, when each wireless communication apparatus 11 is located outside the collation apparatus 1, each wireless communication apparatus 11 may transmit ID information to the collation apparatus 1 through wired or wireless communication via the communicator 111.

The collator 12 collates information acquired by the wireless communication apparatus 11A through wireless communication with the RFID tag 2 and information acquired by the wireless communication apparatus 11B through wireless communication with the RFID tag 2. The collation result is handed over to the collation result output device 13.

Contents of the collation results are not particularly limited, but may be information expressing match or mismatch or may be acquired information itself. Moreover, according to the number of matched pieces of information of the wireless communication apparatus 11, a segment representing the degree of matching may be used as the collation result. For example, when all the pieces of the acquired information of the wireless communication apparatus 11 match, the collation result may be designated as "fully matching" and when half or more of the pieces of the acquired information of the wireless communication apparatus 11 match, the collation result may be designated as "substantially matching."

The collation result output device 13 outputs the collation result. An output scheme is not particularly limited. The output scheme may be, for example, an electric signal, speech or image. Furthermore, the output from the collation result output device 13 may be used as an input signal to an internal or external system (not shown).

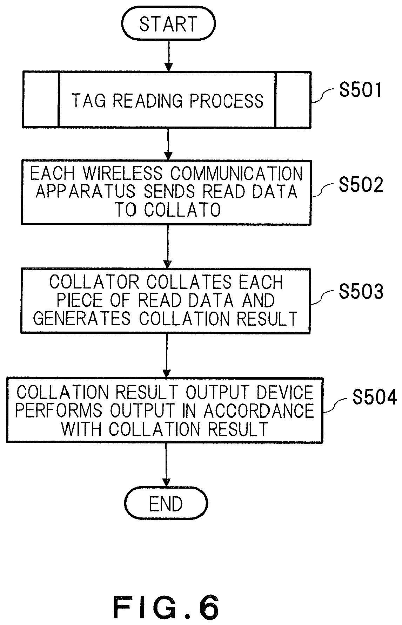

Next, a processing flow according to the fourth arrangement will be described using a flowchart. FIG. 6 is a flowchart of schematic processing according to the fourth arrangement. Note that the flowcharts which will be described hereinafter are presented as examples, which, however, will not particularly limit the present invention. For example, chronological order of processes may be changed if possible.

Each wireless communication apparatus 11 carries out a tag reading process (S501). The tag reading process is similar to the message sequence chart described in the foregoing arrangements. After each wireless communication apparatus 11 carries out the tag reading process, each wireless communication apparatus 11 sends read data to the collator 12 (S502). The collator 12 collates the respective pieces of the read data and generates a collation result (S503). The collation result is sent to the collation result output device 13 and the collation result output device 13 performs output in accordance with the collation result under a predetermined scheme (S504). This is the flowchart of schematic processing according to the fourth arrangement.

As described above, according to the fourth arrangement, data pieces read by the respective wireless communication apparatuses 11 are collated and it is thereby possible to improve the accuracy of desired data.

Each process in the arrangements described above can be implemented by software (program). Thus, the arrangements described above can be implemented using, for example, a general-purpose computer apparatus as basic hardware and causing a processor mounted in the computer apparatus to execute the program.

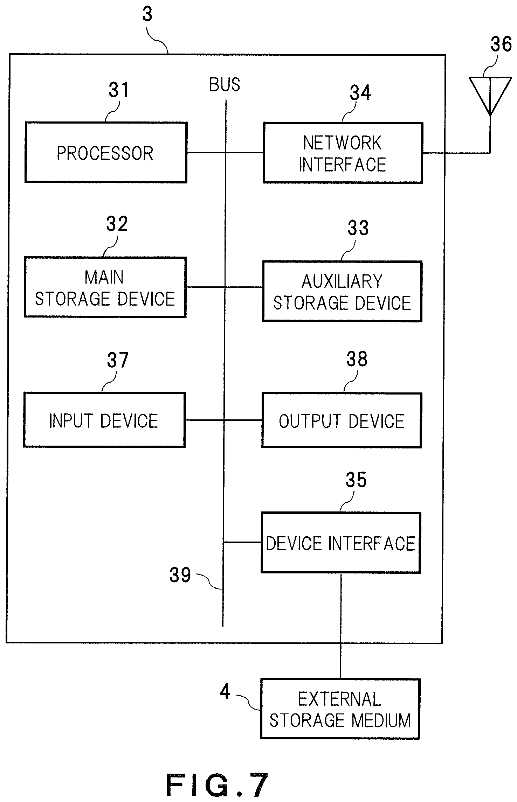

FIG. 7 shows a hardware configuration example of the wireless communication apparatus 11 or the collation apparatus 1 according to an arrangement of the present invention.

The wireless communication apparatus 11 or the collation apparatus 1 can be implemented as a computer apparatus 3 provided with a processor 31, a main storage device 32, an auxiliary storage device 33, a network interface 34, a device interface 35, an antenna 36, an input device 37 and an output device 38, all of which are connected to each other via a bus 39.

The processor 31 reads a program from the auxiliary storage device 33, develops and executes the program on the main storage device 32, and can thereby implement functions of the instructor 112 and the collator 12.

Note that the processor 31 may also refer to an application specific integrated circuit, a field programmable gate array (FPGA), a programmable logic device (PLD) or the like.

The wireless communication apparatus 11 of the present arrangement may be implemented by installing a program to be executed on the wireless communication apparatus 11 in a computer apparatus in advance or by installing a program stored in a storage medium such as a CD-ROM or distributed via a network in a computer apparatus as appropriate.

The network interface 34 is an interface to connect to a network via the antenna 36 or the like. Functions of the communicator 111 and the antenna device 113 can be implemented by the network interface.

The device interface 35 is an interface to provide connection to an external storage medium 4 or the like. The computer apparatus 3 may be connected to each wireless communication apparatus 11 via the device interface 35. An output destination of the collation result output device 13 may be the external storage medium 4 or the like.

The external storage medium (external apparatus) 4 may be any given recording medium such as an HDD, a CD-R, a CD-RW, a DVD-RAM or a DVD-R or a storage apparatus such as an NAS.

The input device 37 is provided with an input device such as a keyboard, a mouse or a touch panel, and the output device 38 is composed of a display such as an LCD (liquid crystal display) or a CRT (cathode ray tube). The output device implements functions of the collation result output device 13. An operation signal from the input device 37 is outputted to the processor 31. The input device 37 or the output device 38 may be connected to the device interface 35 from the outside.

The main storage device 32 is a memory apparatus to temporarily store an instruction to be executed by the processor 31 and various kinds of data, and may be a volatile memory such as DRAM or non-volatile memory such as a MRAM. The auxiliary storage device 33 is a storage apparatus to permanently store a program or data or the like, and is, for example, a HDD or an SSD. Data used for communication may be stored in the main storage device 32, the auxiliary storage device 33 or the external storage medium 4.

While certain arrangements have been described, these arrangements have been presented by way of example only, and are not intended to limit the scope of the claims. Indeed, the apparatuses described herein may be embodied in a variety of other forms; furthermore, various omissions, substitutions and changes in the form of the arrangements described herein may be made without departing from the spirit of the inventions. The accompanying claims and their equivalents are intended to cover such forms or modifications as would fall within the scope and spirit of the inventions.

The present disclosure extends to the following series of numbered clauses:
1. A tag reading apparatus comprising:
   a communicator (111) arranged for performing wireless communication with an RFID tag; and
   an instructor (112) arranged for giving an instruction to stop wireless communication with the RFID tag to another tag reading apparatus based on a response result of the RFID tag to a response request to the RFID tag.
2. The tag reading apparatus according to clause 1, wherein when the communicator acquires desired data from the RFID tag, the instructor gives an instruction to accept wireless communication with the other tag reading apparatus to the RFID tag and gives an instruction to resume wireless communication with the RFID tag to the other tag reading apparatus.
3. The tag reading apparatus according to clause 2, wherein the instructor gives, when the communicator acquires the desired data from the RFID tag a predetermined number of times, the resume instruction to the other tag reading apparatus.
4. The tag reading apparatus according to any one of clauses 1 to 3, wherein when the instructor acquires the stop instruction from the other tag reading apparatus, the communicator stops wireless communication with the RFID tag.
5. The tag reading apparatus according to clause 4, wherein when the instructor acquires the resume instruction from the other tag reading apparatus, the communicator resumes wireless communication with the RFID tag.
6. The tag reading apparatus according to clause 4 or 5, wherein when a predetermined time passes after the instructor acquires the stop instruction from the other tag reading apparatus, the communicator resumes wireless communication with the RFID tag.
7. A collation apparatus comprising:
   a first tag reading apparatus (11A) according to any one of clauses 1 to 6;
   a second tag reading apparatus (12A) according to any one of clauses 4 to 6; and
   a collator (12) configured to make a collation to determine whether or not desired data acquired by the first tag reading apparatus from the RFID tag matches desired data acquired by the second tag reading apparatus from the RFID tag.
8. A tag reading method for causing a computer to execute:
   giving an instruction (S105) to stop wireless communication with an RFID tag to another tag reading apparatus based on a response result of the RFID tag to a response request to the RFID tag; and
   reading data (S107) from the RFID tag.
9. A computer program which when executed by a computer, causes a computer to perform processing comprising:
   giving an instruction (S105) to stop wireless communication with an RFID tag to another tag reading apparatus based on a response result of the RFID tag to a response request to the RFID tag; and
   reading data (S107) from the RFID tag.

## Claims

1. A tag reading apparatus comprising:
a communicator (111) arranged for performing wireless communication with an RFID tag; and
an instructor (112) arranged for giving an instruction to stop wireless communication with the RFID tag to another tag reading apparatus based on a response result of the RFID tag to a response request to the RFID tag.

2. The tag reading apparatus according to claim 1, wherein when the communicator acquires desired data from the RFID tag, the instructor gives an instruction to accept wireless communication with the other tag reading apparatus to the RFID tag and gives an instruction to resume wireless communication with the RFID tag to the other tag reading apparatus.

3. The tag reading apparatus according to claim 2, wherein the instructor gives, when the communicator acquires the desired data from the RFID tag a predetermined number of times, the resume instruction to the other tag reading apparatus.

4. The tag reading apparatus according to any one of claims 1 to 3, wherein when the instructor acquires the stop instruction from the other tag reading apparatus, the communicator stops wireless communication with the RFID tag.

5. The tag reading apparatus according to claim 4, wherein when the instructor acquires the resume instruction from the other tag reading apparatus, the communicator resumes wireless communication with the RFID tag.

6. The tag reading apparatus according to claim 4 or 5, wherein when a predetermined time passes after the instructor acquires the stop instruction from the other tag reading apparatus, the communicator resumes wireless communication with the RFID tag.

7. A collation apparatus comprising:
a first tag reading apparatus (11A) according to any one of claims 1 to 6;
a second tag reading apparatus (12A) according to any one of claims 4 to 6; and
a collator (12) configured to make a collation to determine whether or not desired data acquired by the first tag reading apparatus from the RFID tag matches desired data acquired by the second tag reading apparatus from the RFID tag.

8. A tag reading method for causing a computer to execute:
giving an instruction (S105) to stop wireless communication with an RFID tag to another tag reading apparatus based on a response result of the RFID tag to a response request to the RFID tag; and
reading data (S107) from the RFID tag.

9. A computer program which when executed by a computer, causes a computer to perform processing comprising:
giving an instruction (S105) to stop wireless communication with an RFID tag to another tag reading apparatus based on a response result of the RFID tag to a response request to the RFID tag; and
reading data (S107) from the RFID tag.
